# EUROPEAN PATENT SPECIFICATION

(11) **EP 0 421 569 B1**
(45) Date of publication and mention of the grant of the patent: **09.03.1994**
(21) Application number: 90306028.3
(22) Date of filing: 01.06.1990
(51) Int. Cl.: F16F 1/36, F16F 1/44, F16F 3/08, F16F 15/08

(54) **Load-cushioning device and resilient ring therefor**
Abfedernde Befestigung und elastischer Ring dafür
Dispositif amortisseur de charges et anneau élastique pour cela

(30) Priority: 02.10.1989 US 416184
(43) Date of publication of application: 10.04.1991
(73) Proprietor: GENCORP INC., Akron Ohio 44313 (US)
(72) Inventor: Harrison, Pamela J., Pleasant Lake, Indiana 46779 (US); Hein, Richard D., Wabash, Indiana 46992 (US)
(74) Representative: Stoner, Gerard Patrick

(56) References cited:
- EP-A- 0 209 280
- DE-A- 2 344 262
- DE-A- 3 119 150
- DE-A- 3 533 428
- US-A- 2 462 011
- US-A- 2 468 901

## Description

The invention relates to devices for resiliently supporting loads or dampening impact loads, and especially to the resilient elastomeric rings which are used in such devices.

US-A-2,819,060 and US-A-2,819,063 are typical of the many patents which relate to such devices. US-A-2,819,060 uses circular rubber rings of uniform cross-section acting between opposed coaxial conical surfaces to resiliently resist unidirectional or bidirectional loads along the centre axis of the rings.

EP-A-209280 describes an anti-vibration mount in which a resilient ring, disposed rollably between two rigid conical seating surfaces, comprises a plurality of resiliently deformable balls joined by thin connecting necks which facilitate rolling of the balls. The respective preambles of claims 1 and 10 are based on this document.

The present inventors have conceived the problem of providing a device of this type whose response can be "tuned" so as to be different in different lateral directions.

In a first aspect, the invention provides a load-cushioning device comprising first and second parts with at least one pair of opposed concentric rigid conical surfaces, and a resilient ring positioned for rollable compressive engagement between the conical surfaces as they move relative to one another,
characterised in that the ring has two smaller cross-section segments diametrically opposed across the ring in a first lateral direction of the device, connecting between two larger cross-section segments diametrically opposed across the ring in a second lateral direction of the device transverse to the first lateral direction, whereby the device has a different resilient response for deformation in each of said lateral directions.

In another aspect the invention provides a resilient ring suitable for rollable compressive engagement between relatively movable opposed concentric rigid conical surfaces of a load cushioning device, and having smaller cross-section segments connecting between larger cross-section segments of the ring,
characterised in that
there are two said smaller cross-section segments, diametrically opposed across the ring in a first lateral direction of the ring, and two said larger cross-section segments, diametrically opposed across the ring in a second lateral direction of the ring transverse to the first lateral direction, and in that the larger cross-section segments have a uniform circular cross-section so as to constitute toroidal segments.

In one preferred aspect we provide a toroidally-shaped resilient ring positionable between a pair of concentrically-spaced conical surfaces for rolling, compressive engagement with the surfaces as they move relative to one another, comprising:
(a) a pair of opposing, longer toroidal segments which have adjacent opposing ends; and
(b) a pair of opposing, shorter toroidal segments which connect opposing ends of the longer toroidal segments which have substantially larger cross-sections than those of the shorter toroidal segments.

It is also useful to consider the angular relationship of the ring supporting means relative to the vertical axis on which the means are mounted in the load-cushioning device. These provisions, either individually and collectively, allow for dynamic rate tuning in the three principal axes; vertical, fore and aft, and lateral.

Embodiments of the invention are now described by way of example with reference to the accompanying drawings, in which:
Fig 1 is a split cross-section of a load cushioning device which employs elastomeric rings, embodying the invention, the left half of the figure showing the device in a substantially unloaded position with the rings in a relaxed uncompressed condition, and the right half of the figure showing the device in a loaded position with the rings compressed;
Fig 2 is a plan view of an elastomeric ring;
Fig 3 is a section of the ring at line 3-3 of Fig 2;
Fig 4 is a graphic representation of axial deflection characteristics of a device when rubber hardness, cone angles and ring types are varied, and
Fig 5 is a graphic representation of radial deflection characteristics of a device when radial loads are applied in various directions.

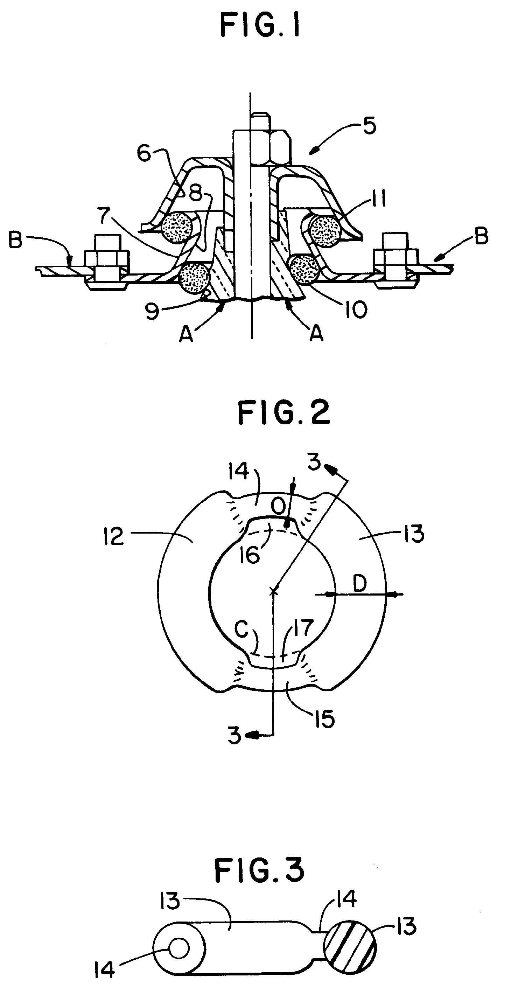

With general reference to the drawings for like parts and particular reference to Fig 1, there is shown a load-cushioning device 5 which is positioned between two parts A and B of an automobile. The device 5 essentially comprises four concentrically-spaced, rigid conical metal surfaces 6 to 9 between which are placed a pair of different sized rubber doughnut or toroidally-shaped rubber rings 10,11 which rollingly and compressively engage the four conical surfaces 6 to 9 as relative movement between the parts A and B occurs bringing the surfaces 6 to 9 closer together.

The uppermost, inwardly-facing conical surface 6 and the lowermost, outwardly-facing conical surface 9 are secured to part A. The outwardly and inwardly-facing conical surfaces 7,8 between them are on a single conical part secured to part B.

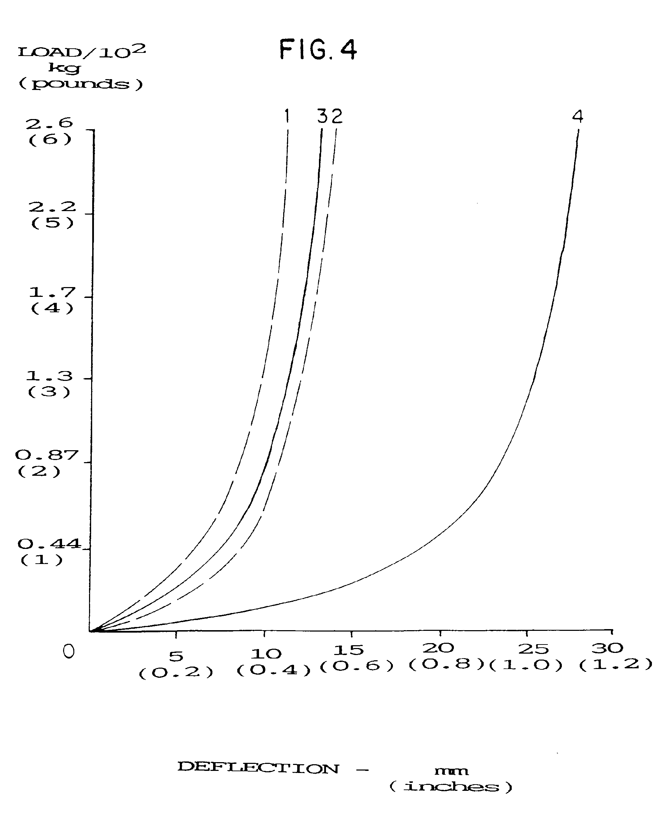

Each of the rings 10,11 as best seen in Figs 2 and 3 comprises a major, i.e. circumferentially longer, pair of toroidal segments 12,13 which are connected by a much shorter pair of opposing toroidal segments 14,15 which are concentric with the longer toroidal segments 12,13 about the circular circumferentially-extending center axis of the ring and which have smaller cross-sectional areas than the longer or larger toroidal segments 12,13 which, for example, have a diameter D which is twice the diameter O of the smaller toroidal segments 14,15.

While any of a number of elastomers may be used in the practice of the invention, rubber is preferred.

In Fig 2 a conical surface C is shown in dotted line to show how a pair of opposing recesses or voids 16 and 17 are formed in the device adjacent each of the smaller, pinched areas of the smaller toroidal segments 14,15 and adjacent the conical surface C. It can be appreciated that the foregoing described toroidal structure will provide unique resilient load-cushioning characteristics of the two different toroidal segments 12 and 13 and 14 and 15.

The angle of the support for the torus of the invention to the vertical axis of the load-cushioning device is important relative to the response rate of the device. Simply put, the more acute this cone angle, the softer or higher the vertical (axial) response rate becomes; the horizontal response rates, on the other hand, become harder or lessen as the conical angle decreases.

The durometer hardness of the elastomer used to make the toroidally-shaped ring contributes to a greater or lesser degree to the rate of response of the load-cushioning device. All other variables remaining constant, a higher durometer, i.e. harder rubber is deflected less than softer rubber.

Fig 4 illustrates these effects. In the examples of Fig 4, deflection was measured in the axial direction i.e. along the direction of the central fixing bolt shown in Fig 1.

Curves 1 and 2 (broken lines) are for embodiments of the invention, using a non-uniform torus shape like that of Fig 2. Each device had a 30° cone angle; for Curve 1, 66 Durometer elastomer (Shore A) was used for the rings; for Curve 2, 48 Durometer. Curve 3 again relates to a 30° cone angle with 48 Durometer rings, but with a plain torus shape. It will be noted that the use of the tori embodying the invention did not substantially affect the axial response characteristics.

Curve 4, relating to a plain 48 Durometer torus but with the cone angle reduced to 15°, shows how the axial response is thereby increased.

The specific configuration of the torus likewise affects the response of the device in various directions. Increasing the diameter of the torus increases the vehicle load carrying capability.

The relative diameters of the major and shorter pairs of toroidal segments contribute to the non-uniform response characteristic in the horizontal (radial) plane.

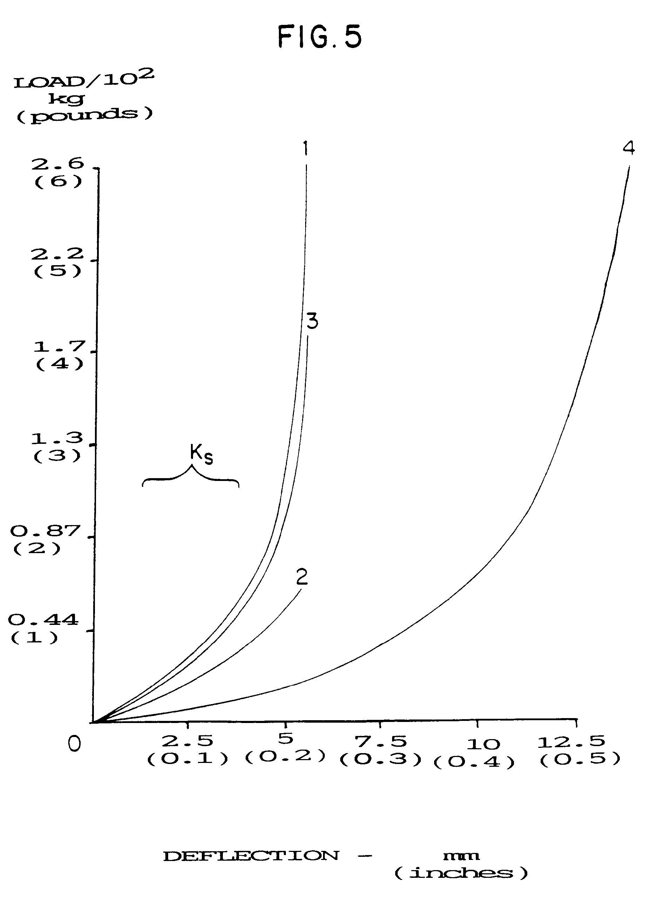

All four curves in Fig 5 relate to the same device, with a 30° cone angle and 48 Durometer rings of the Fig 2 form. Curves 1 to 3 are static load deflection curves for radial (horizontal) loads.

Curve 1 is for loading along a line bisecting the thicker toroid segments, Curve 2 for a line bisecting the thinner toroid segments, and Curve 3 for an intermediate radial direction at 45° to these.

Static spring constants Kₛ were determined in the deflection range marked "Kₛ" on Fig 5. They were:
Curve 1 : Kₛ = 175 kg/cm (980 lbs/in)
Curve 2 : Kₛ = 100 kg/cm (550 lbs/in)
Curve 3 : Kₛ = 140 kg/cm (800 lbs/in)
Curve 4 shows axial deflection and is hence the same as Curve 2 in Fig 4. Kₛ for vertical deflection was 35 kg/cm (200 lbs/in).

When one of the rolling rubber rings of the invention is rotated relative to the other, for example at an angle of 45°, the load deflection changes. This is readily apparent from Fig 5 where it can be seen that the value of Curve 3 lies between the values for Curves 1 and 2.

Thus there has been described a unique rolling, resilient rubber torus or ring which can be designed to resiliently respond to different laterally imparted loads in radial directions against the ring. Inherently this design, because of the rolling capability of each individual torus, provides low resistance to conical deflection.

## Claims

1. A load-cushioning device comprising first and second parts (A,B) with at least one pair of opposed concentric rigid conical surfaces (8,9;6,7), and a resilient ring (10,11) positioned for rollable compressive engagement between the conical surfaces (8,9;6,7) as they move relative to one another,
characterised in that the ring (10,11) has two smaller cross-section segments (14,15) diametrically opposed across the ring in a first lateral direction of the device, connecting between two larger cross-section segments (12,13) diametrically opposed across the ring in a second lateral direction of the device transverse to the first lateral direction, whereby the device has a different resilient response for deformation in each of said lateral directions.

2. A load-cushioning device according to claim 1 in which the smaller cross-section segments (14,15) are circumferentially shorter than the larger cross-section segments (12,13).

3. A load-cushioning device according to claim 1 or claim 2 in which the small cross-section segments (14,15) are recessed away from the conical surfaces (8,9;6,7).

4. A load-cushioning device according to any one of the preceding claims in which the larger cross-section segments (12,13) have circular cross-section.

5. A load-cushioning device according to claim 4 in which the larger cross-section segments are of uniform cross-section, so as to constitute toroidal segments.

6. A load-cushioning device according to any one of the preceding claims in which the smaller cross-section segments (14,15) are of uniform circular cross-section.

7. A load-cushioning device according to any one of the preceding claims in which the smaller cross-section segments (14,15) and the larger cross-section segments (12,13) are substantially concentric with one another about an annular mid-axis of the ring (10,11).

8. A load-cushioning device according to any one of the preceding claims in which the ring (10,11) is rubber.

9. A load-cushioning device according to any one of the preceding claims in which the ring (10,11) is circular.

10. A resilient ring (10;11) suitable for rollable compressive engagement between relatively movable opposed concentric rigid conical surfaces (8,9;6,7) of a load cushioning device (5), and having smaller cross-section segments (14,15) connecting between larger cross-section segments (12,13) of the ring,
characterised in that
there are two said smaller cross-section segments (14,15), diametrically opposed across the ring (10;11) in a first lateral direction of the ring, and two said larger cross-section segments (12,13), diametrically opposed across the ring (10;11) in a second lateral direction of the ring transverse to the first lateral direction, and in that the larger cross-section segments (12,13) have a uniform circular cross-section so as to constitute toroidal segments.

11. A ring according to claim 10 in which the larger cross-section segments (12,13) are circumferentially longer than the smaller cross-section segments (14,15).

12. A ring according to claim 10 or claim 11 in which the smaller cross-section segments (14,15) are of uniform circular cross-section.

13. A ring according to any one of claims 10 to 12 in which the smaller cross-section segments (14,15) and the larger cross-section segments (12,13) are substantially concentric about an annular mid-axis extending around the ring (10,11).

14. A ring according to any one of claims 10 to 13 which is circular.

15. A ring according to any one of claims 10 to 14 which is of rubber.

## Patentansprüche

1. Belastungen abfedernde Vorrichtung, umfaßend einen ersten und einen zweiten Teil (A,B) mit zumindest einem Paar gegenüberliegender konzentrischer starrer konischer Oberflächen (8,9;6,7) und einen elastischen Ring (10,11), der zum rollenden durch Zusammendrücken bewirkten Ineinandergreifen zwischen den konischen Oberflächen (8,9;6,7) angeordnet ist, während sich diese relativ zueinander bewegen,
dadurch gekennzeichnet, daß der Ring (10,11) zwei Segmente (14,15) mit kleinerem Querschnitt aufweist, die über den Ring in eine erste laterale Richtung der Vorrichtung diametral entgegengesetzt sind und eine Verbindung zwischen zwei Segmenten (12,13) mit größerem Querschnitt herstellen, die über den Ring in eine zweite laterale Richtung der Vorrichtung quer zur ersten lateralen Richtung diametral entgegengesetzt sind, wodurch die Vorrichtung eine unterschiedliche elastische Reaktion zur Durchfederung in jeder der genannten lateralen Richtungen aufweist.

2. Belastungen abfedernde Vorrichtung nach Anspruch 1, bei der die Segmente mit kleinerem Querschnitt (14,15) entlang dem Umfang kürzer sind als die Segmente (12,13) mit größerem Querschnitt.

3. Belastungen abfedernde Vorrichtung nach Anspruch 1 oder 2, bei der die Segmente (14,15) mit dem kleinen Querschnitt von den konischen Oberflächen (8,9;6,7) weg ausgespart sind.

4. Belastungen abfedernde Vorrichtung nach einem der vorhergehenden Ansprüche, bei der die Segmente (12,13) mit größerem Querschnitt einen kreisförmigen Querschnitt aufweisen.

5. Belastungen abfedernde Vorrichtung nach Anspruch 4, bei der die Segmente mit größerem Querschnitt einen gleichmäßigen Querschnitt aufweisen, sodaß sie torische Segmente darstellen.

6. Belastungen abfedernde Vorrichtung nach einem der vorhergehenden Ansprüche, bei der die Segmente (14,15) mit kleinerem Querschnitt einen gleichmäßigen Querschnitt aufweisen.

7. Belastungen abfedernde Vorrichtung nach einem der vorhergehenden Ansprüche, bei der die Segmente (14,15) mit kleinerem Querschnitt und die Segmente (12,13) mit größerem Querschnitt im wesentlichen um eine ringförmige Mittelachse des Rings (10,11) miteinander konzentrisch sind.

8. Belastungen abfedernde Vorrichtung nach einem der vorhergehenden Ansprüche, bei der der Ring (10,11) aus Gummi besteht.

9. Belastungen abfedernde Vorrichtung nach einem der vorhergehenden Ansprüche, bei der der Ring (10,11) kreisförmig ist.

10. Elastischer Ring (10,11), der für rollendes durch Zusammendrücken bewirktes Ineinandergreifen zwischen relativ bewegbaren gegenüberliegenden konzentrischen starren konischen Oberflächen (8,9;6,7) einer Belastungen abfedernden Vorrichtung (5) geeignet ist und Segmente (14,15) mit kleinerem Querschnitt aufweist, die eine Verbindung zwischen Segmenten (12,13) mit größerem Querschnitt des Rings herstellen,
dadurch gekennzeichnet, daß
zwei genannte Segmente (14,15) mit kleinerem Querschnitt über den Ring (10,11) in einer ersten lateralen Richtung des Rings diametral entgegengesetzt sind und zwei genannte Segmente (12,13) mit größerem Querschnitt über den Ring (10,11) in einer zweiten lateralen Richtung des Rings quer zur ersten lateralen Richtung diametral entgegengesetzt sind, und dadurch, daß die Segmente (12,13) mit größerem Querschnitt einen gleichmäßigen kreisförmigen Querschnitt aufweisen, sodaß sie torische Segmente darstellen.

11. Ring nach Anspruch 10, bei dem die Segmente (12,13) mit größerem Querschnitt entlang dem Umfang länger sind als die Segmente (14,15) mit kleinerem Querschnitt.

12. Ring nach Anspruch 10 oder 11, bei dem die Segmente mit kleinerem Querschnitt (14,15) einen gleichmäßigen kreisförmigen Querschnitt aufweisen.

13. Ring nach einem der Ansprüche 10 bis 12, bei dem die Segmente (14,15) mit kleinerem Querschnitt und die Segmente (12,13) mit größerem Querschnitt im wesentlichen konzentrisch um eine ringförmige Mittelachse sind, die sich um den Ring (10,11) erstreckt.

14. Ring nach einem der Ansprüche 10 bis 13, der kreisförmig ist.

15. Ring nach einem der Ansprüche 10 bis 14, der aus Gummi besteht.

## Revendications

1. Dispositif amortisseur de charges comprenant des première et deuxième parties (A,B) avec au moins une paire de surfaces coniques rigides concentriques opposées (8,9;6,7), et un anneau élastique (10,11) positionné pour une mise en prise de compression par roulement entre les surfaces coniques (8,9;6,7) lorsqu'elles se déplacent l'une par rapport à l'autre,
caractérisé en ce que l'anneau ( 10,11) possède deux segments de section transversale plus petite (14,15) opposés diamétralement à travers l'anneau dans une première direction latérale du dispositif, établissant une connexion entre deux segments de section transversale plus grande (12,13) opposés diamétralement à travers l'anneau dans une deuxième direction latérale du dispositif transversal à la première direction latérale, par quoi le dispositif a une réponse élastique différente pour la déformation dans chacune desdites directions latérales.

2. Dispositif amortisseur de charges selon la revendication 1, dans lequel les segments de section transversale plus petite (14,15) sont circonférentiellement plus courts que les segments de section transversale plus grande (12,13).

3. Dispositif amortisseur de charges selon la revendication 1 ou la revendication 2, dans lequel les segments de section transversale plus petite (14,15) sont évidés au loin des surfaces coniques (8,9;6,7).

4. Dispositif amortisseur de charges selon l'une des revendications précédentes, dans lequel les segments de section transversale plus grande (12,13) ont une section transversale circulaire.

5. Dispositif amortisseur de charges selon la revendication 4, dans lequel les segments de section transversale plus grande ont une section transversale uniforme, de façon à constituer des segments toroïdaux.

6. Dispositif amortisseur de charges selon l'une des revendications précédentes, dans lequel les segments de section transversale plus petite (14,15) ont une section transversale circulaire uniforme.

7. Dispositif amortisseur de charges selon l'une des revendications précédentes, dans lequel les segments de section transversale plus petite (14,15) et les segments de section transversale plus grande (12,13) sont sensiblement concentriques les uns avec les autres autour d'un mi-axe annulaire de l'anneau (10,11).

8. Dispostiif amortisseur de charges selon l'une des revendications précédentes, dans lequel l'anneau (10,11) est en caoutchouc.

9. Dispositif amortisseur de charges selon l'une des revendications précédentes, dans lequel l'anneau (10,11) est circulaire.

10. Anneau élastique (10;11) approprié pour une mise en prise de compression par roulement entre des surfaces coniques rigides concentriques opposées (8,9;6,7) déplaçables relativement d'un dispositif amortisseur de charges (5) et présentant des segments de section transversale plus petite (14,15) établissant une connexion entre des segments de section transversale plus grande (12,13) de l'anneau,
caractérisé en ce que sont prévus deux desdits segments de section transversale plus petite (14,15) opposés diamétralement à travers l'anneau (10;11) dans une première direction latérale de l'anneau, et deux desdits segments de section transversale plus grande (12,13), opposés diamétralement à travers l'anneau (10;11) dans une deuxième direction latérale de l'anneau transversal à la première direction latérale, et en ce que les segments de section transversale plus grande (12,13) ont une section transversale circulaire uniforme de façon à constituer des segments toroïdaux.

11. Anneau selon la revendication 10, dans lequel les segments de section transversale plus grande (12,13) sont circonférentiellement plus longs que les segments de section transversale plus petite (14,15).

12. Anneau selon la revendication 10 ou la revendication 11, dans lequel les segments de section transversale plus petite (14,15) ont une section transversale circulaire uniforme.

13. Anneau selon l'une des revendications 10 à 12, dans lequel les segments de section transversale plus petite (14,15) et les segments de section transversale plus grande (12,13) sont sensiblement concentriques autour d'un mi-axe annulaire s'étendant autour de l'anneau (10,11).

14. Anneau selon l'une des revendications 10 à 13 qui est circulaire.

15. Anneau selon l'une des revendications 10 à 14 qui est en caoutchouc.
